Europäisches Patentamt

European Patent Office

Office européen des brevets

(11) Publication number: **0 028 019**
**A1**

## EUROPEAN PATENT APPLICATION

(21) Application number: **80106504.6**

(22) Date of filing: **23.10.80**

(51) Int. Cl.³: **F 16 B 37/04**

(30) Priority: **23.10.79 IL 58535**

(43) Date of publication of application: **06.05.81**
Bulletin 81/18

(84) Designated Contracting States: **AT BE CH DE FR GB IT LI LU NL SE**

(71) Applicant: **Danino, Abraham, 8 Granados Street, Ramat-Gan (IL)**

(72) Inventor: **Danino, Abraham, 8 Granados Street, Ramat-Gan (IL)**

(74) Representative: **Vossius.Vossius.Tauchner.Heune-mann.Rauh, Siebertstrasse 4 P.O. Box 86 07 67, D-8000 München 86 (DE)**

(54) Device consisting of a blind nut and drive head for mounting same, and method of operation.

(57) The device consists of a blind nut and a drive head. The blind nut comprises an internally threaded body (1), whose outer wall merges at one end into a thin-walled cylinder (2). The drive head (3) is adapted to be attached to the fixed part of any suitable tool, e. g. any conventional pneumatic or electric tool having a two-directional motor and clutch arrangement or a hand tool, and has an axially extending bore (3'), surrounded by an annular groove (7) with a conical wall (8) towards the center and a rounded bottom profile (9). A spindle (4) housed within said bore (3') and provided with a thread for engaging said nut is freely rotatable in both directions. For operating the device, spindle (4) is screwed into body (1) and cylinder (2) collapses radially outwards while its free end is forced into groove (7), sliding along wall (8) and being off-set in the bottom (9) of groove (7) to form a flange. The collapsed wall (2) folds in upon itself and is forced against the sheet material (10), so that the nut is mounted fixedly.

A method for operating the above characterized device.

VOSSIUS · VOSSIUS · TAUCHNER · HEUNEMANN · RAUH
PATENTANWÄLTE

SIEBERTSTRASSE 4 · 8000 MÜNCHEN 86 · PHONE: (089) 47 40 75
CABLE: BENZOLPATENT MÜNCHEN · TELEX 5-29 453 VOPAT D

0028019

Our Ref. P 839 EP                    Oct. 23, 1980

Abraham Danino

Ramat-Gan, Israel

---

" Device Consisting of a Blind Nut and Drive Head for Mounting
Same, and Method of Operation "

---

Priority: October 23, 1979, Israel, No. 58 535

---

     The present invention relates to a device consisting of a blind nut and drive head for mounting it, and
a method of operation.

     Blind nuts are designed to provide a deep
thread in thin sheet material and to provide a tight nut
connection for bolts or screws where the head only can
be tightened, while the nut is inaccessible.
Conventional blind nuts generally comprise a threaded
bottom part whose outer wall merges into a cylindrical

0028019

shape, the free end of which is provided with a flange
by means of which, during mounting, said nut is held
in a prepared hole in the material to which the nut
is to be mounted, the tool for mounting it engaging
with said thread and drawing its bottom part towards
said material, whereby said cylindrical wall collapses
and is applied against the opposite surface of said
material. The flange which must be provided on these
conventional nuts in order to mount them, however,
is wasteful in material and requires an additional
step in their manufacture.

It is the object of the present invention to provide a simplified device comprising a nut and a tool head
for mounting it, and a method for its operation.

The device consists of a blind nut and
drive head for mounting same, the nut comprising an
internally threaded body whose outer wall merges
at one end into a thin-walled cylinder, the head
being adapted to be attached to the fixed part of any
suitable tool and having an axially extending bore
surrounded by an annular groove, with a conical wall
towards the center and a rounded bottom profile, and
a spindle freely rotatable in both directions being
housed within said bore and provided with a thread
for engaging said nut.

The head may be attached to a conventional electric or pneumatic tool having a two-directional motor and clutch arrangement. Alternatively, means may be provided on the head to keep it in a fixed position, while means may be provided on the spindle to rotate it manually.

The invention is illustrated, by way of example only, in the accompanying drawings, in which:

Figure 1 shows a cross section of a nut according to the invention, before being mounted.

Figure 2 shows a nut according to the invention attached to sheet material.

Figure 3 is a cross section of a nut and its driving head in position for mounting the nut.

The nut according to the invention consists of a body 1 which is internally threaded and whose outer wall merges at one end into a thin-walled cylinder 2. A drive head 3 is provided with an axially extending bore 3' in which a spindle 4 held in a bearing 5 mounted therein is rotatable, the spindle being driven by any conventional two-directional motor having a clutch mechanism of any known type or of the kind described in the copending European patent/application based on Israeli priority application No. 58 534, filed on October 23, 1979, the main claim of which reads:

A multi-purpose tool with a two-directional motor, comprising a spindle rotatably mounted in bearings within a cylindrical housing said spindle being provided at its free end with means to receive a suitable operating tool, a clutch adapted to be controlled by a spring which surrounds the spindle and an adjustment ring constituting a bearing surface for said spring , the ring being loosely mounted on said spindle and held thereon by a clamp-nut threaded to engage with the outside of said housing.

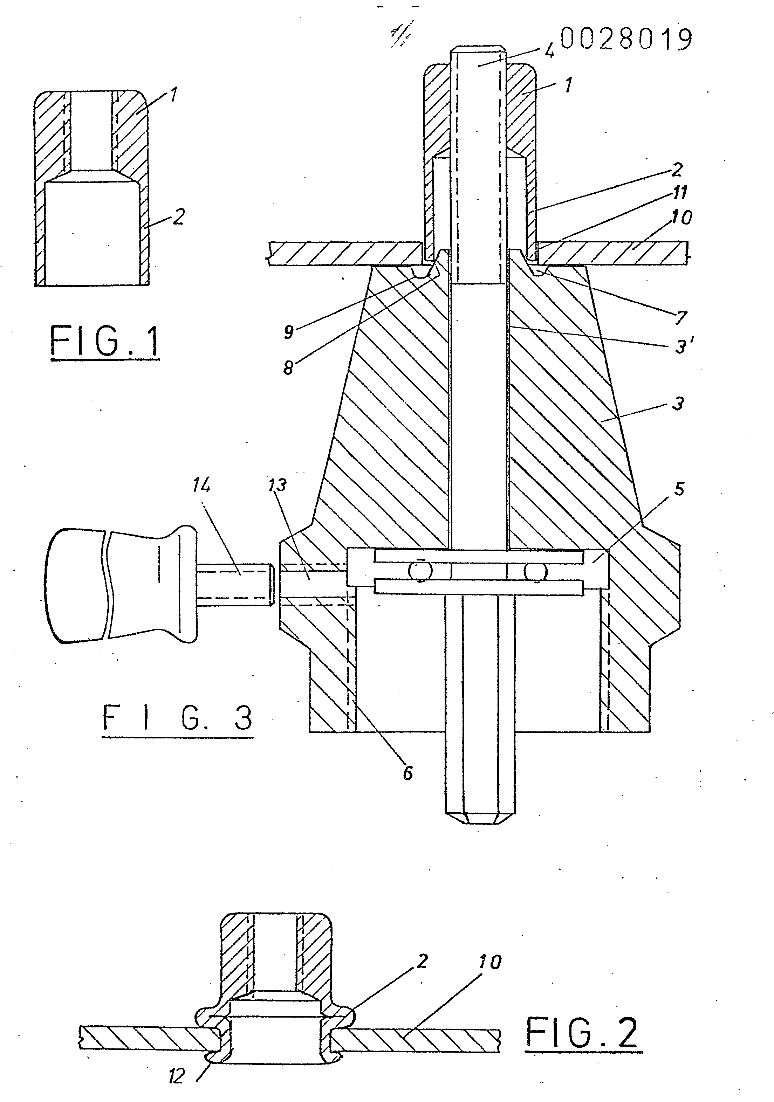

The head 3 is provided at one end with an internal thread 6 by means of which it can be mounted to the fixed part of a suitable tool housing said motor and clutch, e.g. a drill, or to any other suitable fixed supporting mechanism in cases where it is desired to operate the spindle and the drive mechanism manually. The other end of head 3 is provided with an annular groove 7, axial with said bore 3', and spindle 4, and having a conical wall 8 slanting outwards towards the axis, the bottom part 9 of the groove 7 having a rounded profile. In order to mount the nut according to the invention to a sheet of material 10, a hole 11 substantially equal to the outer diameter of the cylindrical wall 2 of the nut is made therein, said nut is placed into said hole with the wall 2 abutting against the slanted wall 8 of groove 7, and spindle 4 is screwed into body 1. Upon further insertion of said spindle, cylinder 2 collapses radially outwards, while its free end is forced into groove 7, sliding along wall 8 and being off-set in the bottom 9 of groove 7 to form a flange 12, as can be seen in Fig. 2. The collapsed wall 2 folds in upon itself and is forced against the sheet material 10, so that the nut is mounted fixedly therein. When the spindle is withdrawn by rotating it in the opposite direction, the nut is ready to receive a screw or bolt.

While the outside of the threaded part of head 3 may be of hexagonal profile to tighten it onto a machine tool or to hold it in the jaws of a vice, a radially extending threaded bore 13 may be made therein to permit a threaded hand-tool 14 to engage with bore 13 to hold head 3 manually. The inner end of the spindle 4 may be provided with a hexagonal profile, whereby the spindle can be rotated manually with the aid of a wrench or similar to place the nut into position without the use of a motor tool.

C L A I M S

1. A device consisting of a blind nut and drive head for mounting same, the nut comprising an internally threaded body (1) whose outer wall merges at one end into a thin-walled cylinder (2), the drive head (3) being adapted to be attached to the fixed part of any suitable tool and having an axially extending bore (3') surrounded by an annular groove (7) with a conical wall (8) towards the center and a rounded bottom profile (9), a spindle (4) freely rotatable in both directions being housed within said bore (3') and provided with a thread for engaging said nut.

2. A device as claimed in claim 1, wherein said drive head (3) is adapted to be attached to any conventional pneumatic or electric tool having a two-directional motor and clutch arrangement.

3. A device as claimed in claim 1 or 2, wherein said drive head (3) is provided with a threaded radially extending bore (13) for engagement with a hand tool (14) and the spindle (4) is adapted to be rotated by a wrench or similar.

4.    Method for operating a device as claimed in any of claims 1 to 3, characterized by

a) placing the nut into a hole (11) in a sheet of material (10), the diameter of the hole being substantially equal to the external diameter of the cylinder (2) of the nut, and the wall of the cylinder (2) abutting against the conical wall (8) of the groove (7) of the drive head (3),

b) screwing the spindle (4) in the threaded body (1) to force said cylinder (2) to collapse radially outwards, its free end being forced into the groove (7) to form a flange (12) on one side of the sheet material (10), while the upper part of the wall of the cylinder (2) folds in upon itself thereby being forced against the other side of said sheet material (10), thus fixedly mounting said nut, and

c) withdrawing said spindle (4) from said threaded body (1) by rotating the spindle (4) in the opposite direction.

**FIG.1**

**FIG.3**

**FIG.2**

0028019

0028019

## EUROPEAN SEARCH REPORT

**European Patent Office**

EP 80 10 6504.6

| DOCUMENTS CONSIDERED TO·BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | FR - A - 1 226 973 (TALBOT TOOL CO.) <br> * fig. 1 to 7 * | 1,2,4 | F 16 B 37/04 |
| X | BE - A - 704 997 (LINREAD) <br> * fig. 1 to 6 * | 1,2,4 | |
| X | US - A - 3 698 278 (W.H. TREMBLEY) <br> * fig. 1 to 4 * | 1,2,4 | |
| A | DE - A - 1 500 645 (AERPAT) | | **TECHNICAL FIELDS SEARCHED** (Int. Cl.³) |
| A | DE -B - 2 019 955 (SHUR-LOK CORP.) | | F 16 B 37/04 |
| A | DE - A - 2 111 524 (McLEAN-FOGG LOCK NUT CO.) | | |
| A | DE - U - 1 938 382 (GRETSCH-UNITAS) | | |
| A | GB - A - 1 195 005 (STANDARD PRESSED STEEL CO.) | | |
| A | US - A - 2 914 106 (T.R. BOYD) | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |
| Place of search | Date of completion of the search | Examiner |
| Berlin | 20-01-1981 | ZAPP |

EPO Form 1503.1 06.78